# EUROPEAN PATENT SPECIFICATION

(11) **EP 4 293 327 B1**
(45) Date of publication and mention of the grant of the patent: **04.02.2026**
(21) Application number: 23178973.6
(22) Date of filing: 13.06.2023
(51) Int. Cl.: G01G 19/42, G01G 21/22, A01G 9/14, A01G 27/00, G01G 17/00, G01G 17/04

(54) **WEIGHING PLATFORMS AND SYSTEM FOR GREENHOUSES**
WIEGEPLATTFORMEN UND SYSTEM FÜR GEWÄCHSHÄUSER
PLATEFORMES DE PESAGE ET SYSTÈME POUR SERRES

(30) Priority: 17.06.2022 IT 202200012833
(43) Date of publication of application: 20.12.2023
(73) Proprietor: C-Led Srl, 40026 Imola (IT)
(72) Inventor: GUIZZARDI, Andrea, 40054 BUDRIO (BO) (IT); ROPA, Gabriele, 40026 IMOLA (BO) (IT); BETTI, Lorenzo, 40026 IMOLA (BO) (IT); ACCORSI, Mattia, 40060 DOZZA (BO) (IT); CATANI, Guido, 48025 RIOLO TERME (RA) (IT)
(74) Representative: Del Nero, Susanna

(56) References cited:
- JP-A- 2012 098 164
- KR-B1- 102 002 869

## Description

The present invention relates to the technical field of greenhouses for growing ornamental or edible plants from early stage after seeding up to full vegetative development. More particularly, the present invention relates to a weighing platform and a system for weighing plants grown in a greenhouse, preferably grown in pots, with the aim of optimizing the irrigation and the consumption of water in the greenhouse.

Generally in greenhouses plants, even grown in pots, are placed on the ground. Alternatively, they can be placed on growth benches and raised beds, like the one shown e.g. in Figure 1 of the patent KR1855205B1 of Korea Greenhouse Horticulture Ict Ind Cooperative.

JP05574921B2 describes a weighing machine wherein one load cell is interposed between a couple of top and bottom frames supporting a load. Said frames are built using hollow prism pipes that are welded together. Two vertical pipes and two horizontal pipes form a structure having an overall H-shape, with two vertical external shorter pipes representing the legs of the H. Two longer horizontal pipes represent the horizontal connection between said two vertical legs. Between said two shorter vertical pipes, a further eccentric pipe is welded, that is parallel to said two vertical legs and that is used to fix said load cell. A pair of H-shaped frames are superimposed, the load cell being the only connection between the two H-shaped frames. A weighing dish is arranged on top of the top frame; on said weighing dish, the goods to be weighed are placed.

KR2002869B1 describes a modular goods weight measuring device comprising a plurality of modules. Each module comprises a portion housing a product and a weight measuring portion. The portion housing the product has a parallelepiped shape, and is arranged on top of said weight measuring portion. The weight measuring portion has the same structure as the above-described pair of top and bottom frames. The modules are portions of an unmanned goods sales system, which generates information about the weight according to the weight of the withheld product, and transmits said information to the unmanned goods sales system interface in order to charge customers. No indication is provided regarding the connection of said modules to the charging portion of said unmanned goods sales system.

In greenhouses, there is provided an irrigation system allowing to irrigate plants. It is obvious that plant irrigation must provide an appropriate quantity of water: not too much, because plants could rot/sicken, not too little because plants could dry up.

For calculating the correct requirement/consumption of water, pots/plants are manually weighted, before and after irrigation. In weighing plants, plant growth must be accounted for. In fact, plants are autotrophic organisms, and get the carbon used to produce vegetal tissues from the carbon dioxide (CO₂) contained in the air. A portion of the recorded weight, which obviously tends to grow over time, is due not to the water contained in the growing soil administered through irrigation, but to the natural weight gain of the vegetal tissues due to the growth of plants. Therefore, the weighing of plants can be exploited to monitor the growing rate of said plants, too.

It is worth mentioning that in the irrigation water there might be provided different chemical substances, e.g. fertilizers or phytoiatric products. Weighing plants before and after the irrigation with water containing chemical substances also allows to precisely measure the treatments administered to the plants in the greenhouse.

Nowadays, in greenhouses the weighing of plants is performed manually: a human operator must take single pots/plants, place them on a scale and manually write the weight values; said operation must be repeated several times a day, in greenhouses that can be very wide.

It is worth noting that a producer may own different greenhouses, even placed in different geographical points. Said greenhouses can be oriented differently, e.g. oriented to the south or to the north.

Said greenhouses normally are organized in bays, which are provided with a width that can reach 12 metres and a length that can reach 250 metres.

Over surfaces so wide, the requirement for water can be markedly different among plants placed e.g. in a sunnier portion with respect to plants placed in a less sunny portion of the greenhouse.

The requirement for water can be different among different plants grown inside the same greenhouse.

The weather can markedly affect the water requirement of plants grown in a greenhouse: the presence of clouds or rain can decrease the requirement for water, while a sunny day can increase the requirement for irrigation.

Even the time of the day can affect the humidity conditions in the greenhouse: in a sunny day humidity tends to decrease, during the night humidity tends to increase.

Finally, it is worth remembering that normally greenhouses are irrigated through irrigation systems, known in the art, provided with arms moving over the surface of the greenhouse, which arms can move at different speeds dispensing different quantities of water. The quantity of dispensed water at each passage of the arms, the sliding speed of the arms and the frequency of irrigation operation can all be adjusted: e.g. in a hot month like July, the frequency of irrigation operations can reach five times a day.

Aim of the present invention is providing an automatic weighing platform for plants grown in greenhouses, which is robust and cheap.

A further aim of the present invention is providing a system allowing to monitor the irrigation, the administration of chemical substances with irrigation water, and the growing conditions of the plants grown in a greenhouse.

A further aim of the present invention is adjusting the quantity of water as accurately as possible to the actual water requirement of plants.

This object is achieved by an apparatus and a method having the features of the independent claims. Advantageous embodiments and refinements are specified in claims dependent thereon.

The solution consists in providing a weighing platform provided with just one load cell. Said weighing platform, in the form of a box-like body, comprises:
- a top covering for supporting pots/plants,
- a top half-frame,
- a bottom half-frame,
- a load cell.

In particular, the weighing platform according to the present invention, in combination with the structural features of the platform, provides a load cell of the kind known as off centre load cell and/or shear load cell, and/or bending load cell. In those kinds of load cells, the points of support of the load on the cell and of the cell on the support base are not vertically coincident, and therefore the load cell runs vertically with its end connected to the support point of the load on the cell with respect to the support point of the cell to the mating base.

In this case, as will appear from the following description, the load cell must be fixed to the mating base through a spacer which places it upwardly vertically distanced from the surface of the support base in a measure higher than the run that the end associated with the load performs when a load is supported by the cell.

The box-like body of the weighing platform is made on its top by the top covering, on its bottom by the bottom side of the bottom half-frame, on its sides by the perpendicular edges running around the bottom half-frame.

Substantially, said top covering is integral to the top half-frame, and together they lean on the load cell, which in its turn is fixed to the bottom half-frame. The weight placed or picked on/from the covering plane generates a flexing of the load cell with respect to the bottom half-frame.

The top half-frame is provided with a rigid mesh structure with preferably trapezoidal meshes having different dimensions and shapes. The structure is symmetrical with respect to the transversal axis. In this way, maximal rigidity can be imparted to the plane, while all the flexibility is left to the load cell, thanks to the weight charged upon the load cell.

The rigid mesh structure can be symmetrical even in the longitudinal direction of the weighing platform.

According to an embodiment, said mesh or grid structure is formed by beams crossing each other and on which the top covering plane leans.

An embodiment provides that said beams are formed by ribs with an orientation perpendicular to the top covering plane surface.

According to a further embodiment, which can be provided in combination with one or more of the preceding features, for each half separated by the median transversal axis of said plane and symmetrically in said two halves, said mesh or grid structure is provided with at least two beams oriented substantially tilted with respect to the perimeter sides of the top covering plane and of the weighing platform, preferably with a main directional component in the longitudinal direction of said weighing platform.

The bottom half-frame is provided with four lateral edges perpendicular to the support plane, provided for the containment of pots/plants.

In a preferred embodiment, the weighing platform is provided with a supporting frame having a rectangular shape, provided with four triangular teeth working as feet, which allow to stabilize the platform when it is arranged on the sand/gravel typically provided on greenhouse ground. Said supporting frame is an accessory of the weighing platform, which supports the platform; the stability of the assembly weighing platform-frame is ensured by gravity.

It is worth mentioning that in order to adequately stiffen the weighing platform according to the present invention, there is provided a metallic structure with a certain firmness, in order to obtain a stiff platform. Such stiffness was obtained by adding metallic material: the cost of this addition of material is more than compensated by the presence of just one load cell. Indicatively, the cost for the material addition is lower by an order of magnitude than the cost of a second load cell.

According to the present invention, a system comprising a plurality of weighing platforms installed in a greenhouse allows to manually or automatically record the weight data of the plants in predefined, freely selected time points. Said weight data are then sent to a computer that saves them and can also produce charts allowing to visualize the suitability of irrigation, optionally the administered chemical treatments, and optionally the growing trends of the plants grown in the greenhouse.

The weighing platforms and the weighing system are placed in the humid environment of greenhouses and periodically undergo irrigation. It is worth mentioning that all the components of the system must be provided with a suitable degree of IP protection (IP Code, International Protection Marking, IEC standard 60529). The first digit after IP indicates the level of protection that the enclosure provides against access to hazardous parts (e.g., electrical conductors, moving parts) and the ingress of solid foreign objects. The second digit after IP indicates the level of protection that the enclosure provides against harmful ingress of water. E.g., IP67 indicates that the connection is dust tight (no ingress of dust; complete protection against contact), and that is protected from temporary immersion.

In an embodiment, the degree of protection is at least IP 67 or, preferably, IP68.

Moreover, the metallic portions of the weighing platform are preferably made of galvanized metal, because they work in a humid environment. Presently, the weighing platform is made of galvanized metal, but could also be realized in a plastic material provided with suitable structural properties, or in stainless steel.

In an embodiment, the weighing platforms according to the present invention are organized in a weighing system comprising a plurality of weighing platforms installed in a greenhouse.

Each weighing platform is connected to a weight visualizing device (display) allowing a human operator to read in real time in loco the weights recorded by said weighing platform. Preferably said display is arranged on a pole at a height preventing the wetting of said display during irrigation operations.

The weighing system according to the present invention, comprising a number of weighing platforms suitable for the dimension of the greenhouse and for the type of plant grown in such greenhouse, can be provided with increasing levels of sophistication:
1. According to the invention one display is connected to two weighing platforms. A human operator reads the values shown on the display, and manually writes them on paper or directly in an Excel sheet.
2. In a more sophisticated embodiment, the weighing platforms are connected to a display: to said display one or more weighing platforms can be connected. Said displays are connected to each other through a wired industrial BUS leading to an Ethernet converter. Downward the converter, the signal is transmitted to a PC through a LAN Ethernet web or through another digital protocol compatible with the PC. In this configuration all the connections are wired connections. Through a specific application, on the PC the weight of the plants can be monitored and checked in real time.
3. In a more advanced embodiment, the arrangement is similar to the previous one, but only the connections between the weighing platforms and the displays up to a converter are wired connections. Downward said converter of wired BUS into a wireless web, weight data are transmitted wirelessly. Optionally, the weight data collected in the PC are then sent to a cloud server.
4. In an even more advanced embodiment, the connections between the weighing platforms and the displays are wired connections. The displays comprise an internal wireless module allowing to transmit the weight data directly to the PC. Optionally, the weight data collected in the PC are then sent to a cloud server.
5. In the most advanced embodiment, all the connections are wireless, including the connections among the weighing platforms and the display. In this case, in the weighing platforms there must be provided an electronic board or anyway some components capable of reading the weight and sending the wireless signal. This requires a suitable IP protection for all components. Optionally, the data collected in the PC are sent to a cloud server.

The most advanced embodiments providing the sending of irrigation data to a cloud server allow a remote control of the operations performed in the greenhouse, and an automation of the irrigation operations, when the weight data are connected to the irrigation system. The quantity of water provided by the irrigation system is adjusted to the weight read from the different weighing platforms, with the possibility to irrigate differently the different greenhouse areas. This allows a wiser and more efficient use of water, and even grow conditions that can be adjusted more accurately to the plants actually grown in the greenhouse.

The first advantage of the present invention consists in providing weighing platforms with just one load cell, with an apparent economic advantage. Moreover, the presence of just one load cell is a marked advantage also in terms of weight data processing and especially for the calibration and maintenance of the load cells.

The second advantage lies in the accuracy of measurement obtainable with the present invention: experimentally, the weights reliably weighed range from a minimum of 1 g to a maximum of 30 kg. Indicatively, in greenhouses, the range of reliably measured weights ranges 500 g to 15 kg.

A third advantage is that the weighing of plants can be totally automated. Weight data can be sent to a central computer on which a management software is loaded, allowing to save parameters and obtain a historical archive. In an advanced embodiment, said weight data can be sent to a cloud server. This on the one hand allows a remote control of greenhouses, and on the other hand allows to produce a data log recording e.g. all the irrigation operations performed in a unit of time, and optionally even the treatments administered with said irrigation operations, like e.g. the administration of fertilizers and/or phytoiatric treatments.

A fourth advantage lies in the modularity of the present solution: using the same weighing platforms, a manual system for reading weights, an automatic wired system, up to an automatic wireless system can be alternatively obtained.

A fifth advantage is the saving of water and a wiser and more efficient use of water. With the weighing platform system according to the present invention, the quantity of water provided to the single greenhouse bay can be adjusted manually or automatically, so as to administer a quantity of water precisely adjusted to the growing conditions of the plants, even improving their growth. From data obtained by installing the system of weighing platforms according to the present invention in a greenhouse, the saving of water is estimated to be 20% - 40% with respect to traditional irrigation.

Further advantages and properties of the present invention are disclosed in the following description, in which exemplary embodiments of the present invention are explained in detail based on the drawings:
Figure 1: Assembled axonometric view of a weighing platform;
Figure 2: Exploded axonometric view of a weighing platform;
Figure 3: Axonometric view of an assembled frame;
Figure 4: Top view of a top half-frame;
Figure 5: Transversal section of the top half-frame;
Figure 6: Top view of the bottom half-frame;
Figure 7: Longitudinal section of a weighing platform;
   Figure 8: Schematic representation of a weighing system comprising a plurality of weighing platforms according to the present invention.

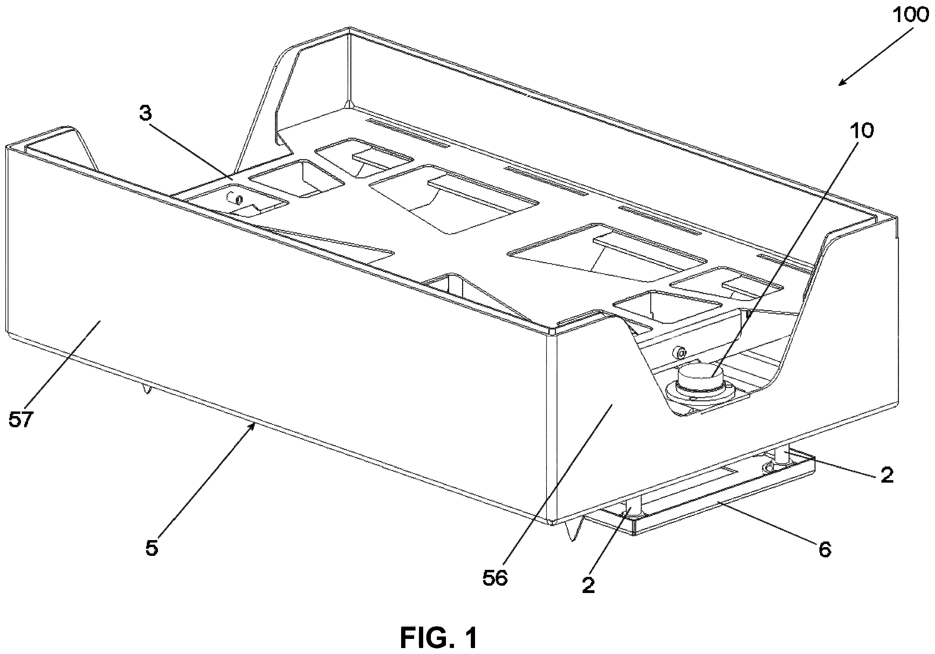

Figure 1 shows a weighing platform 100 according to the present invention in an assembled axonometric view.

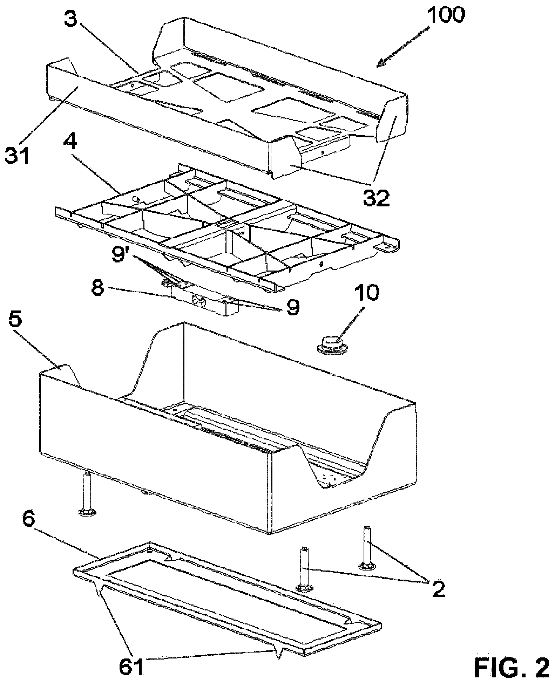

Figure 2 shows a weighing platform 100 according to the present invention in an exploded axonometric view.

The following paragraphs refer indifferently to one or the other of Figures 1 and 2, in that some of the quoted components are visible just in one of the two Figures.

Seen from above, said weighing platform 100 is provided with a rectangular shape. Said weighing platform comprises a top covering 3 under which there are provided a top half-frame 4 and a bottom half-frame 5. The (not shown) pots/plants are supported by the top side of the covering 3. Said top covering 3 comprises a plane parallel to ground for supporting pots/plants, an upward bend 31 perpendicular to the plane supporting pots/plants along its long sides, and four bent wings 32, two for each short side. The bottom half-frame 5 comprises lateral edges 56, 57 for holding the pots/plants; said lateral edges are perpendicular to the plane of the half-frame 5. The slits in the short lateral edges 56 allow to more easily arrange/remove the pots/plants supported by the covering 3. A load cell 8 is placed between said top half-frame 4 and the bottom half-frame 5.

In a preferred embodiment there is provided a bubble level 10 allowing to install said weighing platform 100 perfectly parallel to ground; said parallelism is indispensable for the correct weighing of pots/plants.

The box-like body of the weighing platform 100 is made on its top by the covering 3, on its bottom by the bottom side of the bottom half-frame 5, on its sides perpendicular to the main sides by the lateral perpendicular edges 56, 57 of the bottom half-frame 5. The box-like body of the weighing platform is supported by four adjustable feet 2.

In a preferred embodiment, the box-like body of the weighing platform 100 is supported by a supporting frame 6.

Said covering 3, top half-frame 4, bottom half-frame 5 and supporting frame 6 are preferably made of galvanized metal, as they work in a humid environment. Alternatively, they can be made of plastics or stainless steel.

The covering 3 leans on the top half-frame 4, and is integral to it through screws or other fixing means.

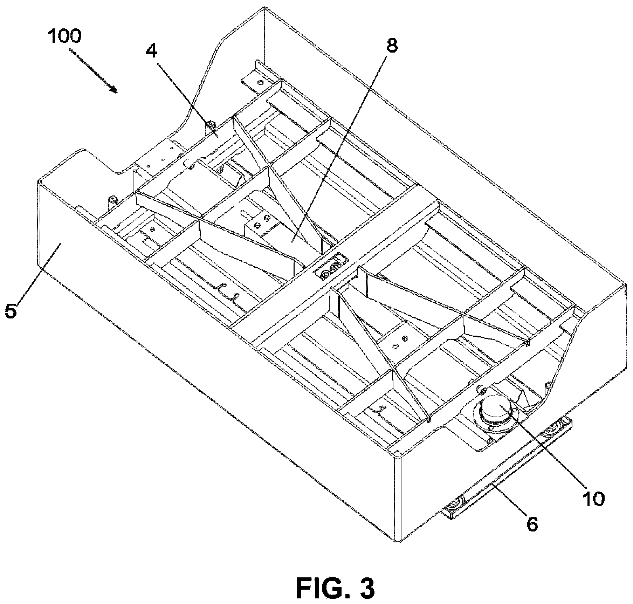

Figure 3 shows in an axonometric view the assembled top half-frame 4 and bottom half-frame 5, i.e. a weighing platform 100 freed from its covering 3.

The load cell 8, which is a commercial item, comprises two pairs of threaded holes 9, 9' (visible in Figure 2): the load cell 8 is placed in the central portion of the top half-frame 4; the top half-frame 4 is connected to the bottom half-frame 5 through said load cell 8.

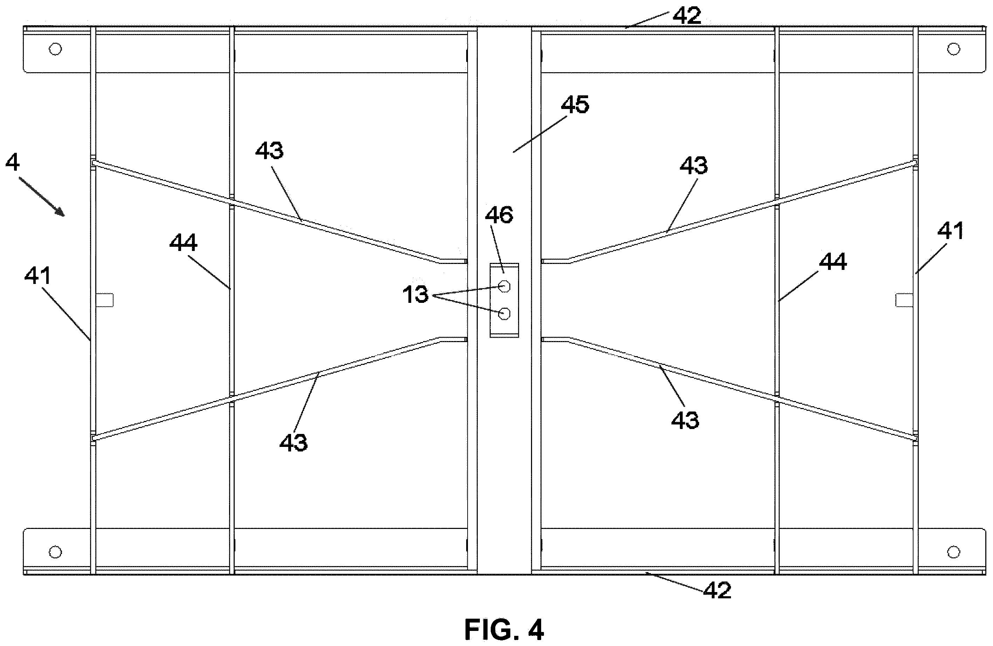

Figure 4 shows said top half-frame 4 in a top view. The top half-frame 4 is made with bent and soldered sheet metal, placed perpendicularly with respect to the covering plane 3, so as to form a grid of ribs perpendicular to said covering plane 3 and provided with a rigidity sufficient to ensure a correct reading of the weights at play.

In a preferred embodiment, said sheet metal is provided with a thickness of 2.5 mm.

Said ribs are oriented so that in an embodiment, the top half-frame 4 is provided with a mesh structure with preferably trapezoidal meshes provided with different dimensions and shapes; the structure is symmetrical with respect to the transversal axis.

In an embodiment, said top half-frame is rotationally symmetrical with respect to an axis passing through the crossing point of the diagonals of the perimeter of said half-frame.

In particular, said top half-frame 4 comprises four edges perpendicular to each other, two short edges 41 and two long edges 42 that are perpendicular to each other, which together form the external perimeter of said top half-frame 4.

Said top half-frame 4 further comprises an I-beam 45 which is placed correspondently to the transversal central axis of said half-frame 4. The I-beam 45 is an upside-down U-bent profile. The base of the U is oriented upwards, and works as a support for the covering 3. In the central point of said I-beam 45 a slit 46 is obtained, provided with a rectangular shape, allowing to expose the internal holes 9 of the load cell 8.

Said top half-frame 4 further comprises two profiles 43 that in the preferred embodiment are placed crossed between the I-beam 45 and the respective short edges 41. The two profiles 43 are continuous, while the arms of the I-beam 45 are cut in order to allow the passage of the profiles 43. Moreover, the two profiles 43 are oriented with a directional component which is mainly in the longitudinal direction of the weighing platform and/or of the top covering 3 and/or of the perimeter of said top half-frame.

In the preferred embodiment, said top half-frame 4 comprises two profiles 44 which are parallel to said short edges 41, placed each between said I-beam 45 and said short edges 41, preferably nearer to the short edges 41, with the aim of stiffening the structure.

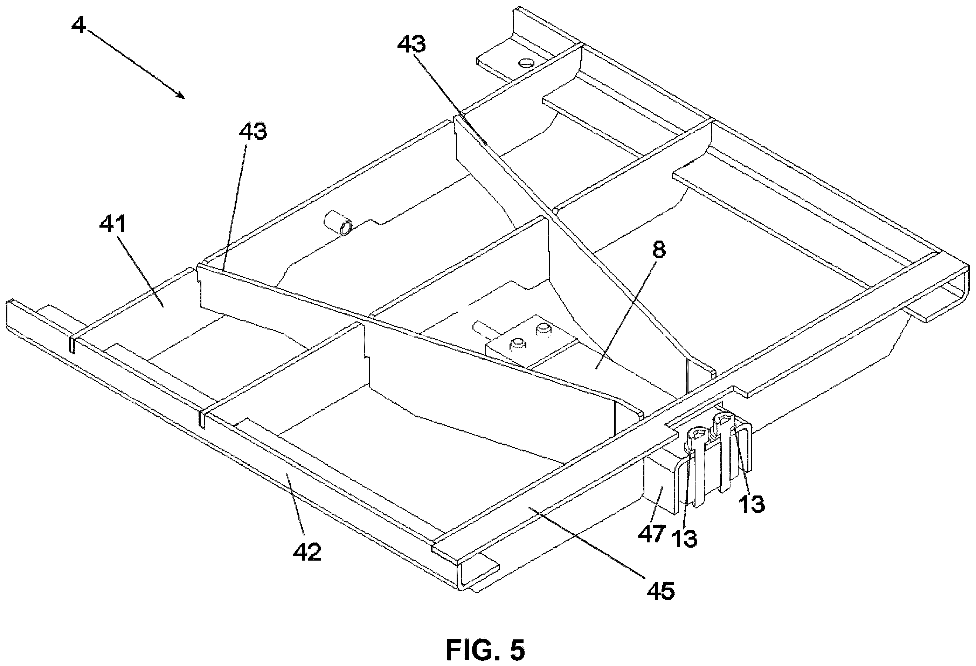

Figure 5 shows a transversal section of the top half-frame 4, which allows to clarify the way in which the load cell 8 is connected to the top half-frame 4. Under said I-beam 45, in particular under the passing slit 46, there is provided an upside-down U-shaped profile 47 provided with a pair of holes 13 in correspondence with the holes 9 for fixing the load cell 8. Said upside-down U-shaped profile 47 is perpendicular to the upside-down U profile 45.

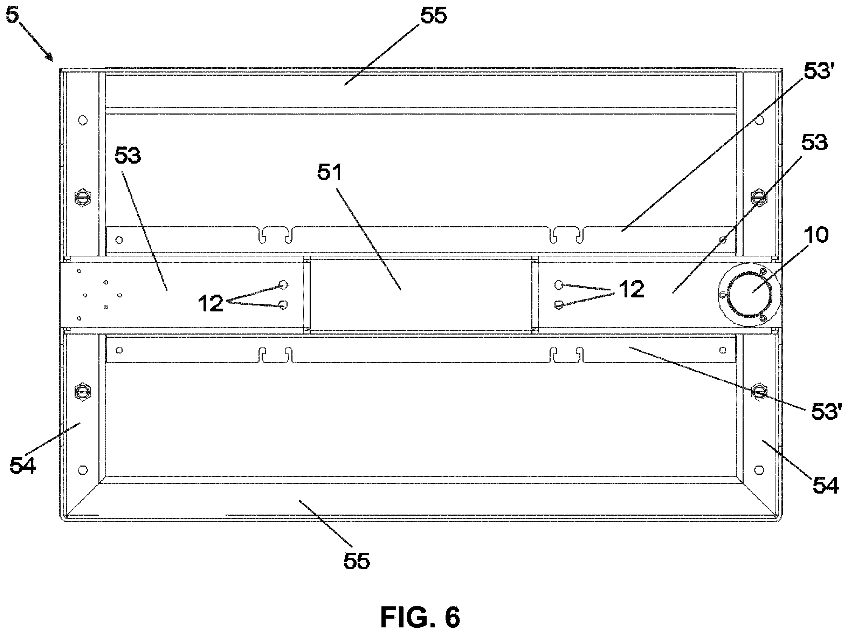

Figure 6 shows the bottom half-frame 5 in a top view. Said bottom half-frame 5 comprises two short sides 54, and two long sides 55. Between said two short sides 54, an omega-bent profile 53 extends longitudinally, parallel to said long sides 55, with its central portion oriented upwards, and two arms 53' soldered to said short sides 54. To each short side 54 a perpendicular edge 56 is fixed, visible in Figure 1. Said perpendicular edge 56 is provided with a central slit, so that it has a U-shape. To each long side 55 there is fixed a perpendicular edge 57, visible in Figure 1. Overall, the lateral edges 56, 57 form a lateral edging for holding pots/plants that have to be arranged on the weighing platform 100.

In the central portion of the omega profile 53 the central part was removed in order to obtain a housing 51 for the load cell 8. In the basis of the omega profile 53 two pairs of holes 12 are obtained. Said holes 12 coincide with the external holes 9' of the load cell 8. Obviously just one pair of holes 12 is used at a time, according to the left or right assembly of the load cell 8.

The load cell 8 is an off centre load cell and/or shear load cell, and/or bending load cell. In this case, the housing 51 for the load cell 8 is made so that the load cell 8, while flexing for the applied weight, does not enter into contact with the bottom half-frame 5. In this kind of load cells, the load cell is provided with two distanced areas, one of which is stressed by the applied load, while the other is meant to lean on the mating base, which in this case is the planar portion of the omega profile 53, to which the load cell is fixed through fixing screws. The two areas are distanced transversally or substantially transversally to the direction of the load, i.e. to the direction on which the force is exerted on the load cell 8, which in this case is the direction of gravity.

In particular, the bottom side of the housing 51 of the load cell in the area wherein the load cell is fixed to said bottom half-frame 5 can be shaped so that the fixing surface of the load cell is raised from the remaining part of the bottom half-frame 5 of said housing 51 in a higher measure than the measuring run of the load cell, i.e. to the maximal run that the end of the area of the load cell to which the load is applied runs with respect to the fixing area of the load cell to the mating base, in this case the fixing area to the top half-frame 4 and to the bottom half-frame 5.

Alternatively, between the area of the load cell 8 meant to lean on the bottom of the planar portion of the omega profile 53 and said bottom wall, a spacer insert can be provided, with a thickness distancing the remaining portion of the body of the load cell, and in particular the area to which the stress of the load is applied in a higher measure than the maximal run of said area in the direction of the bottom wall of the housing, i.e. of the bottom half-frame 5.

The (not shown) output cable from the load cell 8 passes through the top half-frame 4 and the bottom half-frame 5. Caution must be taken so that said cable does not touch the top half-frame 4, so that no interference in the weight reading occurs. The cable exit of the load cell 8 ends with a circular connector with a protection degree IP67. This is aimed for connecting to the measuring electronics placed outside the weighing platform 100.

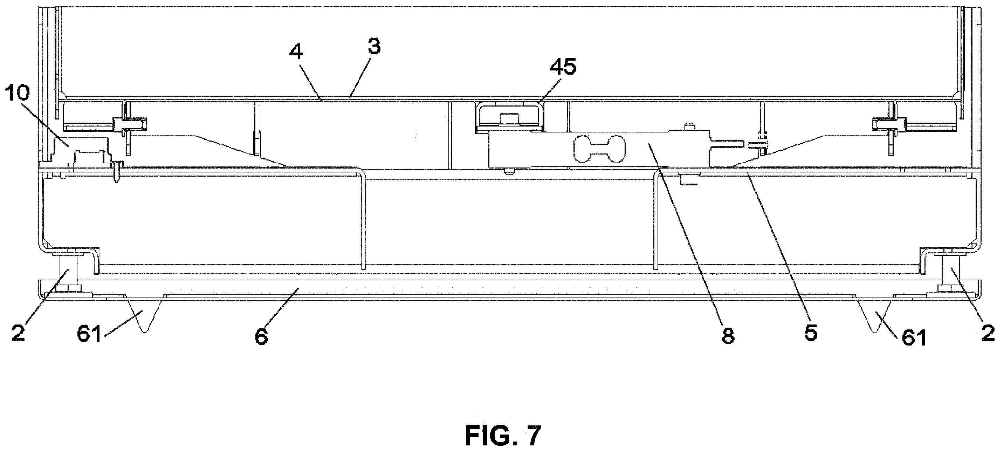

Figure 7 shows a section along the central longitudinal axis of the weighing platform 100. Said top covering 3 is integral with the top half-frame 4, which together lean on the load cell 8, which in its turn is fixed to the bottom half-frame 5. The placed/picked weight generates a flexing of the load cell 8 with respect to said bottom half-frame 5.

Moreover, the section allows to show that the adjustable feet 2, which are fixed to the bottom of the bottom half-frame 5, are supported by the supporting frame 6, provided with four triangular teeth 61, with the vertex of the triangle oriented downward. Such shape of the teeth allows a good anchoring on greenhouse ground, which often is made of gravel. In practice, the supporting frame 6 is arranged on the greenhouse ground, and on said supporting frame 6 the box-like body of the weighing platform 100 is leant. The adjustable feet 2 are adjusted so that the box-like body is perfectly perpendicular to the ground; in a preferred embodiment, this can be verified thanks to the bubble level 10.

The working of the smart weighing platform for detecting the weight of the supported pots/plants occurs as follows.

The top covering 3 is integral with the top half-frame 4, and their movement, generated by the weight of pots/plants supported by the top covering 3, is detected by the load cell 8. The weight of a pot/plant, and/or the weight of water administered through irrigation generates a flexing or a vertical shifting of the end of the load cell fixed to the system composed by the top covering 3 and top half-frame 4, system that is mechanically disengaged, and therefore moves with respect to the bottom half-frame 5. Said flexing or said vertical shifting of the end of the load cell is read by the load cell 8. The rigidity of the system given by the top covering 3 and top half-frame 4 ensures that the weight of the pots/plants is correctly read, independently from the position of the pot/plant on the top covering 3. In other words, the reading of the weight is not influenced by the fact that the pots/plants are placed at the centre or at the periphery of the weighing platform 100.

The load cell 8, connected to the top half-frame 4 and to the bottom half-frame 5, transfers consistent data to the system in a time of maximum two seconds, ensuring to the data infrastructure a rapid and efficient transmission. Therefore, in any combination or-sub-combination with one or more of the further described features, the system according to the present invention provides a visualization time of the weight data of some seconds or even less.

It is worth noting that the components top covering 3 and top half-frame 4 represent the tare of the system. In other words, the weighing platform has a reading margin lower than the nominal value of the load cell, further reduced so as to prevent the need to recalibrate the system or the breaking of the load cell for an excessive load. For example, if the nominal value of the load cell is 40 kg, and the tare due to the components 3 and 4 is 5 kg, the maximal load of the weighing platform is about 30 kg.

The use of an off centre load cell and/or shear load cell, and/or bending load cell allows a better reading of loads placed in peripheral and eccentric positions with respect to the top covering 3 and top half-frame 4.

The system works properly if three parameters are respected:
1. The dimensions of the weighing platform must be compatible with the dimensions of the load cell 8. In the preferred embodiment, a 40 kg load cell was used in a weighing platform of 50x35 cm.
2. The rigidity of the supporting system of the items of pots/plants comprising the top covering 3 and the top half-frame 4 must be maximal, so as not to generate flexing leading to reading errors.
3. The weighing platform 100 must be installed perfectly levelled with respect to the ground.

In a greenhouse, a plurality of weighing platform 100 can be installed in different points of the greenhouse. Said platforms are then connected to a system recording the weight of pots/plants, so as to form a system for the management of irrigation in the greenhouse.

As above explained, traditionally greenhouses are organized in bays. A greenhouse can be provided with tens and tens of bays. A very wide bay can measure 12 metres (width). Indicatively, a greenhouse can be provided with bays 100 to 250 metres long. Therefore, indicatively bays can have dimensions ranging 1,200 to 3,000 square metres.

In the hypothesis of placing the weighing platforms in the middle of the bay, a weighing platform 100 can be placed every 12 metres or every 24 metres. Each weighing platform covers 12 m x 12 m =144 m², or 12 m x 24 m=288 m².

Therefore, a hypothetic bay measuring 1.200 m² is provided with:
- 1,200 m² / 288 m² for platform = 4 weighing platforms per bay
- 1,200 m² / 144 m² for platform = 8 weighing platforms per bay.

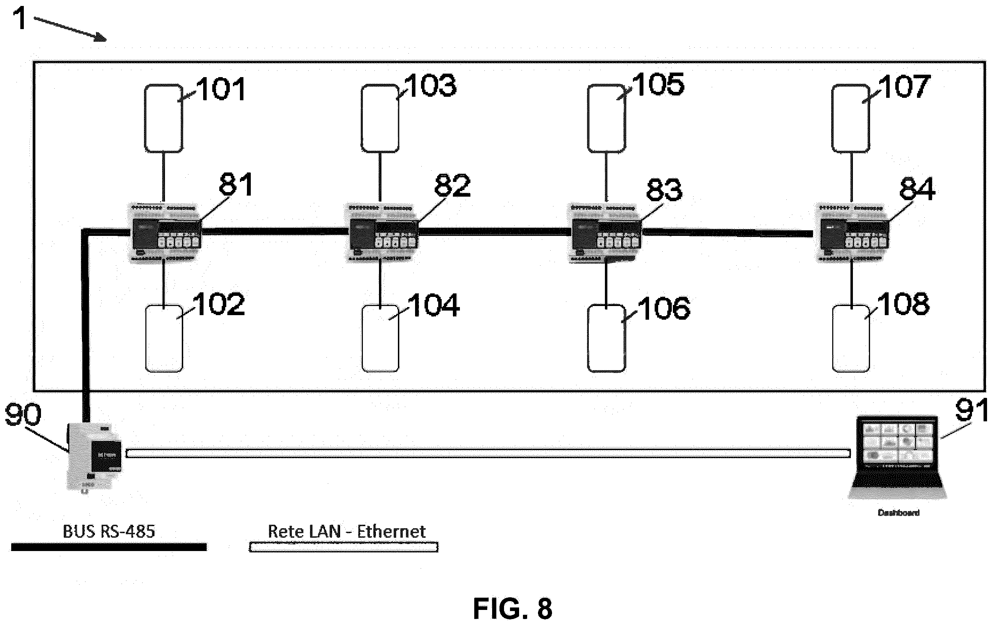

Figure 8 shows the installation of a weighing system comprising eight weighing platforms 101-108 in a bay 1 of a greenhouse.

Each weighing platform 101-108 is connected through a wired connection to a device for visualizing weight (display) 81-84 allowing a human operator to read in loco the weights recorded by said weighing platform in real time.

According to the invention a display 81 is connected to two weighing platforms 101, 102. The display is placed outside the weighing platform, and preferably is arranged on a (not shown) pole near the weighing platform to which it is connected, due to the fact that the system undergoes irrigation. The weight data visualized on the displays 81-84 are sent to a system through a wired BUS.

In a preferred embodiment, said displays 81-84 are connected through a wired BUS RS-485; the choice of this particular BUS was made in order to allow the connection of commercial devices through a cabled bus. Alternatively, instead of BUS RS-485 other kinds of known digital BUS could be used, like e.g. RS-232, CAN-BUS. These kinds of BUS do not allow a direct connection to a PC; therefore, a converter is mandatory, allowing to convert the signal coming from a wired BUS into an Ethernet signal compatible with a PC.

In an embodiment, there is provided an Ethernet converter 90, which converts the BUS RS-485 signal collected by displays 81-84 into a BUS Ethernet signal. The BUS Ethernet conveys the information concerning all the weights recorded in the greenhouse to a managing computer (PC) 91. Said PC 91 allows to visualize the weights read by each display 81-84. A specific software installed on said PC 91 allows to set the time interval between one weight recording and the following one. The software also allows to export the weight data daily recorded in an Excel table saved on said PC 91. The software can prepare a chart with the recorded weight data, and this allows to visualize the suitability of irrigation and the trends of plant growth.

The data saved on the PC 91 can optionally be sent to a (not shown) external server, optionally a server cloud, allowing to remotely manage a plurality of greenhouses through a dashboard. In this situation, the checking of greenhouses can be performed remotely, without the need of in loco staff.

In this context, cloud indicates a type of Internet-based computing that provides shared computer processing resources and data to computers and other devices on demand. It is a model for enabling ubiquitous, on-demand access to a shared pool of configurable computing resources (e.g., computer networks, servers, storage, applications and services), which can be rapidly provisioned and released with minimal management effort. Even in the case of transmission to a cloud, the cloud itself comprises a software capable of receiving said information, showing said information on the display of an informatics device like e.g. a personal computer, and saving statistics concerning the information itself.

In alternative embodiments, the same connections realized in the wired way shown in Figure 8 can be realized in a wireless way.

In a preferred embodiment, as the weighing platforms 101-108 inevitably are wetted by irrigation water, displays 81-84 are preferably connected to weighing platforms 101-108 through a wired connection with a suitable IP protection. Once the weight data reached the displays 81-84, all the connections downward the displays can be wireless connections.

The weighing system according to the present invention, comprising a number of weighing platforms suitable for the dimension of the greenhouse and for the type of plant grown in such greenhouse, can be provided with increasing levels of sophistication:
1. According to the invention one display (81) is connected to two weighing platforms (101, 102). A human operator reads the values shown on the display, and manually writes them on paper or directly in an Excel sheet.
2. In a more sophisticated embodiment, the weighing platforms 101-108 are connected to a display: to said display one or more weighing platform can be connected. Said displays 81-84 are connected to each other through a wired industrial BUS leading to an Ethernet converter 90. Downward the converter 90, the signal is transmitted to a PC 91 through a LAN Ethernet web o through another digital protocol compatible with said PC. This is the configuration shown in Figure 8, wherein all the connections are wired connections. Through a specific application, on the PC the weight of the plants can be monitored and checked in real time.
3. In a more advanced embodiment, the arrangement is the one shown in Figure 8, but only the connections among the weighing platforms 101-108 and the displays 81-84 up to a converter are wired connections. Downward said (not shown) converter of wired BUS into a wireless signal, weight data are transmitted wirelessly. Optionally, the weight data collected in the PC 91 are then sent to a cloud server.
4. In an even more advanced embodiment, the connections between the weighing platforms 101-108 and the displays 81-84 are wired connections. The displays 81-84 comprise an internal wireless module allowing to transmit the weight data directly to the PC 91. Optionally, the weight data collected in the PC 91 are then sent to a cloud server.
5. In the most advanced embodiment, all the connections are wireless, including the connections among the weighing platforms 101, 102 and display 81. In this case, in the weighing platforms there must be provided an electronic board or anyway some components capable of reading the weight and optionally sending the wireless signal directly to the PC 91. This requires a suitable IP protection for all components. Optionally, the data collected in the PC 91 are sent to a cloud server.

In an embodiment, the weight data are used to automatically adjust the irrigation parameters of the automatic irrigation system installed in the greenhouse, e.g.: quantity of water provided by the irrigation arms, sliding speed of the arms over the bay, frequency of irrigation operations in a unit of time.

The method according to the present invention comprises the following steps:
- Arranging a suitable number of weighing platforms 100 per bay, preferably one platform every 144 or 288 m^{2;}
- Placing a suitable number of pots/plants on the covering 3 of each weighing platform 100;
- Setting on said PC 91 a suitable time interval between two weight recordings;
- Performing the weight recording in the pre-set times;
- Optionally sending the weight data to PC 91;
- Optionally through the software installed on the PC 91 preparing a chart of the recorded weight data, so as to verify the suitability of the irrigation and of the administration of chemical substances, and optionally the trends of plant growth in the greenhouse;
- Optionally sending the recorded weight data to a central cloud server.

It is worth mentioning that
- the number of weigh platforms per bay,
- the number of plants to be placed on the weighing platform,
- the weighing time interval, i.e. the number of weighing operations to be performed in 24 hours,
are all parameters depending on the kind of plant grown in the greenhouse, and somehow on its degree of drought tolerance. Said parameters are fixed according to the specific plant grown in the greenhouse and according to the experience of the grower.

Finally, it is worth mentioning that the above-described automatic weighing technology complies with the requirements of Agriculture 4.0.
- 1: bay
- 2: adjustable foot
- 3: top covering
- 4: top half-frame
- 5: bottom half-frame
- 6: supporting frame
- 8: load cell
- 9: holes of the load cell
- 10: bubble level
- 11: LED bar
- 12: holes of the bottom half-frame
- 13: holes of the top half-frame
- 31: lateral edge
- 32: wing
- 41: short edge
- 42: long edge
- 43: cross profiles
- 44: profiles parallel to short edges
- 45: I-beam
- 46: slit
- 47: upside-down U-shaped profile
- 51: load cell housing
- 52: cable clamps
- 53: omega profile
- 54: short side
- 55: long side
- 56: lateral short edge
- 57: lateral long edge
- 61: triangular teeth
- 81-84: display
- 90: Ethernet converter
- 91: PC
- 100-108: weighing platform

## Claims

1. Weighing system for a bay (1) of a greenhouse, comprising:
- a plurality of weighing platforms (101-108) for pots/plants each weighing platform comprising:
- a top covering (3) for supporting at least one pot/plant, preferably comprising two edges (31) perpendicular to the plane on its long sides and four perpendicularly bent wings (32), two for each short side;
- a top half-frame (4) on which said top covering (3) leans;
- a bottom half-frame (5);
wherein
- said top half-frame (4) comprises a rigid mesh or grid structure, wherein meshes have different dimensions and shapes;
- said top half-frame (4) and said top covering (3) together form an integral assembly;
- four adjusting feet (2) fixed to said bottom half-frame (5);
said weighing platform comprising just one load cell (8) fixed between said top half-frame (4) and said bottom half-frame (5), said load cell (8) being the only mechanical connection between said top half-frame (4) and bottom half-frame (5);
- at least one display (81-84) for showing the detected weight, connected at least to a weighing platform (101-108);
- said displays (81-84) being connected through a digital BUS to an Ethernet converter (90);
- said Ethernet converter (90) being connected through a LAN-Ethernet web to a PC (91)
**characterised in that**
one display (81) is connected to two weighing platforms (101, 102).

2. Weighing system for a bay (1) of a greenhouse according to claim 1, wherein said displays (81-84) are connected with a connection provided with an IP protection suitable for protecting them from the irrigation water, said displays (81-84) being preferably arranged on a pole in the vicinity of each weighing platform (101-108).

3. Weighing system for a bay (1) of a greenhouse comprising a plurality of weighing platforms (101-108) according to claim 1 or 2, a plurality of displays (81-84) and a PC (91), wherein
- all the connections up to said PC (91) are wired connections.

4. Weighing system for a bay (1) of a greenhouse comprising a plurality of weighing platforms (101-108) according to claim 1 or 2, a plurality of displays (81-84) and a PC (91), wherein
- the connections among the weighing platforms (101-108) and the displays (81-84) up to a converter of wired BUS into a wireless signal are wired connections; downward said converter of wired BUS into a wireless signal, the weight data are transmitted wirelessly.

5. Weighing system for a bay (1) of a greenhouse comprising a plurality of weighing platforms (101-108) according to claim 1 or 2, a plurality of displays (81-84) and a PC (91), wherein
- the connections between the weighing platforms (101-108) and the displays (81-84) are wired connections, while the displays (81-84) comprise an internal wireless module allowing to transmit the weight data directly to the PC (91).

6. Weighing system for a bay (1) of a greenhouse comprising a plurality of weighing platforms (101-108) according to claim 1 or 2, a plurality of displays (81-84) and a PC (91), wherein
- all the connections are wireless, including the connections among the weighing platforms (101, 102) and display (81), in the weighing platforms there being provided an electronic board or anyway some components capable of reading the weight and sending the wireless signal optionally directly to said PC (91), all the components being provided with a suitable IP protection.

7. Weighing system for a bay (1) of a greenhouse comprising a plurality of weighing platforms (101-108) according to one or more of claims 4-6, a plurality of displays (81-84) and a PC (91), wherein said PC (91) is connected to a cloud server.

8. Method for weighing pots/plants in a greenhouse making use of a weighing system according to one or more of claims 1-7, the method being **characterized by** the following steps:
- Arranging a number of weighing platforms (101-108) suitable for the kind of plant under cultivation per bay;
- Placing a number of pots/plants suitable for the plant-specific growing conditions of each weighing platform (101-108);
- Setting on said PC (91) a time interval suitable for the grown plant between two weight recordings;
- Performing the weight recording in the pre-set times.

9. Method for weighing pots/plants in a greenhouse according to claim 8, the method further comprising the step of:
- sending the weight data to PC (91).

10. Method for weighing pots/plants in a greenhouse according to claim 8 or 9, the method further comprising the step of:
- through the software installed on the PC (91) preparing a chart of the recorded weight data, so as to verify the suitability of the irrigation, optionally the record of the trends of plant growth in the greenhouse and optionally the record of the fertilizing or phytoiatric treatments performed on the plants.

11. Method for weighing pots/plants in a greenhouse according to claims 8-10, the method further comprising the step of:
- sending the recorded weight data to a central cloud server.

12. Method for weighing pots/plants in a greenhouse according to claim 10, wherein the weight data are used to automatically adjust the irrigation parameters of an automatic irrigation system installed in the greenhouse wherein the weighing system according to claims 1-7 is provided, wherein the quantity of water provided by the irrigation arms, and/or the sliding speed of said irrigations arms and/or the frequency of irrigation operations is/are adjusted.

## Patentansprüche

1. Wiegesystem für einen Abschnitt (1) eines Gewächshauses, aufweisend:
- eine Mehrzahl von Wiegeplattformen (101-108) für Töpfe/Pflanzen, wobei jede Wiegeplattform aufweist:
- eine obere Abdeckung (3) zum Halten mindestens eines Topfes / einer Pflanze, die vorzugsweise zwei Kanten (31) rechtwinklig zur Ebene an ihren Längsseiten und vier rechtwinklig gebogene Flügel (32), zwei für jede kurze Seite, aufweist;
- einen oberen Halbrahmen (4), an dem die obere Abdeckung (3) anliegt;
- einen unteren Halbrahmen (5);
wobei
- der obere Halbrahmen (4) eine starre Netz- oder Gitterstruktur aufweist, wobei die Maschen unterschiedliche Abmessungen und Formen haben;
- der obere Halbrahmen (4) und die obere Abdeckung (3) zusammen eine integrale Anordnung bilden;
- vier an dem unteren Halbrahmen (5) befestigte Stellfüße (2);
wobei die Wiegeplattform nur eine zwischen dem oberen Halbrahmen (4) und dem unteren Halbrahmen (5) befestigte Wägezelle (8) aufweist, wobei die Wägezelle (8) die einzige mechanische Verbindung zwischen dem oberen Halbrahmen (4) und dem unteren Halbrahmen (5) ist;
- mindestens eine Anzeigevorrichtung (81-84) zum Anzeigen des detektierten Gewichts, die mindestens mit einer Wiegeplattform (101-108) verbunden ist;
- wobei die Anzeigevorrichtungen (81-84) über einen digitalen BUS mit einem Ethernet-Konverter (90) verbunden sind;
- wobei der Ethernet-Konverter (90) über ein LAN-Ethernet-Netzwerk mit einem PC (91) verbunden ist,
**dadurch gekennzeichnet, dass**
eine Anzeigevorrichtung (81) mit zwei Wiegeplattformen (101, 102) verbunden ist.

2. Wiegesystem für einen Abschnitt (1) eines Gewächshauses nach Anspruch 1, wobei die Anzeigevorrichtungen (81-84) mit einer Verbindung verbunden sind, die einen IP-Schutz aufweist, der dazu geeignet ist, sie vor dem Bewässerungswasser zu schützen, wobei die Anzeigevorrichtungen (81-84) vorzugsweise an einer Stange in der Nähe jeder Wiegeplattform (101-108) angeordnet sind.

3. Wiegesystem für einen Abschnitt (1) eines Gewächshauses, das eine Mehrzahl von Wiegeplattformen (101-108) nach Anspruch 1 oder 2, eine Mehrzahl von Anzeigevorrichtungen (81-84) und einen PC (91) aufweist, wobei
- alle Verbindungen bis zu dem PC (91) drahtgebundene Verbindungen sind.

4. Wiegesystem für einen Abschnitt (1) eines Gewächshauses, das eine Mehrzahl von Wiegeplattformen (101-108) nach Anspruch 1 oder 2, eine Mehrzahl von Anzeigevorrichtungen (81-84) und einen PC (91) aufweist, wobei
- die Verbindungen zwischen den Wiegeplattformen (101-108) und den Anzeigevorrichtungen (81-84) bis zu einem Konverter von dem drahtgebundenen BUS in ein Drahtlossignal drahtgebundene Verbindungen sind; wobei die Wiegedaten ab dem Konverter von dem drahtgebundenen BUS in ein Drahtlossignal drahtlos übertragen werden.

5. Wiegesystem für einen Abschnitt (1) eines Gewächshauses, das eine Mehrzahl von Wiegeplattformen (101-108) nach Anspruch 1 oder 2, eine Mehrzahl von Anzeigevorrichtungen (81-84) und einen PC (91) aufweist, wobei
- die Verbindungen zwischen den Wiegeplattformen (101-108) und den Anzeigevorrichtungen (81-84) drahtgebundene Verbindungen sind, während die Anzeigevorrichtungen (81-84) ein internes Drahtlosmodul aufweisen, was es ermöglicht, die Wiegedaten direkt an den PC (91) zu übertragen.

6. Wiegesystem für einen Abschnitt (1) eines Gewächshauses, das eine Mehrzahl von Wiegeplattformen (101-108) nach Anspruch 1 oder 2, eine Mehrzahl von Anzeigevorrichtungen (81-84) und einen PC (91) aufweist, wobei
- alle Verbindungen drahtlos sind, einschließlich der Verbindungen zwischen den Wiegeplattformen (101, 102) und der Anzeigevorrichtung (81), wobei sich in den Wiegeplattformen eine elektronische Leiterplatte oder jedenfalls einige Komponenten befinden, die in der Lage sind, das Gewicht zu lesen und das Drahtlossignal optional direkt an den PC (91) zu senden, wobei alle Komponenten mit einem geeigneten IP-Schutz versehen sind.

7. Wiegesystem für einen Abschnitt (1) eines Gewächshauses, das eine Mehrzahl von Wiegeplattformen (101-108) nach einem oder mehreren der Ansprüche 4-6, eine Mehrzahl von Anzeigevorrichtungen (81-84) und einen PC (91) aufweist, wobei der PC (91) mit einem Cloud-Server verbunden ist.

8. Verfahren zum Wiegen von Töpfen/Pflanzen in einem Gewächshaus unter Verwendung eines Wiegesystems nach einem oder mehreren der Ansprüche 1-7, wobei das Verfahren
**gekennzeichnet ist durch** die folgenden Schritte:
- Anordnen einer Anzahl von Wiegeplattformen (101-108), die für die Art der angebauten Pflanzen pro Abschnitt geeignet sind;
- Platzieren einer Anzahl von Töpfen/Pflanzen, die für die pflanzenspezifischen Wachstumsbedingungen jeder Wiegeplattform (101-108) geeignet sind;
- Einstellen eines für die angebaute Pflanze geeigneten Zeitintervalls zwischen zwei Gewichtsaufzeichnungen auf dem PC (91);
- Durchführen der Gewichtsaufzeichnung zu den voreingestellten Zeiten.

9. Verfahren zum Wiegen von Töpfen/Pflanzen in einem Gewächshaus nach Anspruch 8, wobei das Verfahren ferner den folgenden Schritt aufweist:
- Senden der Wiegedaten an den PC (91).

10. Verfahren zum Wiegen von Töpfen/Pflanzen in einem Gewächshaus nach Anspruch 8 oder 9, wobei das Verfahren ferner den folgenden Schritt aufweist:
- Erstellen eines Diagramms der aufgezeichneten Wiegedaten mithilfe der auf dem PC (91) installierten Software, um die Eignung der Bewässerung zu überprüfen, optional das Aufzeichnen der Trends des Pflanzenwachstums in dem Gewächshaus und optional das Aufzeichnen der Düngungsbehandlungen oder phytotherapeutischen Behandlungen, die an den Pflanzen durchgeführt werden.

11. Verfahren zum Wiegen von Töpfen/Pflanzen in einem Gewächshaus nach Ansprüchen 8-10, wobei das Verfahren ferner den folgenden Schritt aufweist:
- Senden der aufgezeichneten Wiegedaten an einen zentralen Cloud-Server.

12. Verfahren zum Wiegen von Töpfen/Pflanzen in einem Gewächshaus nach Anspruch 10, wobei die Wiegedaten verwendet werden, um die Bewässerungsparameter eines automatischen Bewässerungssystems, das in dem Gewächshaus installiert ist, in dem sich das Wiegesystem nach Ansprüchen 1-7 befindet, automatisch anzupassen, wobei die von den Bewässerungsarmen gelieferte Wassermenge und/oder die Gleitgeschwindigkeit der Bewässerungsarme und/oder die Häufigkeit der Bewässerungsvorgänge angepasst wird/werden.

## Revendications

1. Système de pesage pour une chapelle (1) d'une serre, comprenant :
- une pluralité de plateformes de pesage (101-108) pour des pots/plantes, chaque plateforme de pesage comprenant :
- un revêtement supérieur (3) pour soutenir au moins un(e) pot/plante, de préférence comprenant deux bords (31) perpendiculaires au plan sur ses côtés longs et quatre ailettes (32) recourbées perpendiculairement, deux pour chaque côté court ;
- un demi-cadre supérieur (4) sur lequel s'appuie ledit revêtement supérieur (3) ;
- un demi-cadre inférieur (5) ;
dans lequel
- ledit demi-cadre supérieur (4) comprend une structure en maille rigide ou en grille, dans lequel des mailles présentent des dimensions et des formes différentes ;
- ledit demi-cadre supérieur (4) et ledit revêtement supérieur (3) forment ensemble un assemblage solidaire ;
- quatre pieds ajustables (2) fixés contre ledit demi-cadre inférieur (5) ;
ladite plateforme de pesage comprenant uniquement une cellule de pesage (8) fixée entre ledit demi-cadre supérieur (4) et ledit demi-cadre inférieur (5), ladite cellule de pesage (8) étant la seule liaison mécanique entre ledit demi-cadre supérieur (4) et ledit demi-cadre inférieur (5) ;
- au moins un afficheur (81-84) pour montrer le poids détecté, relié au moins à une plateforme de pesage (101-108) ;
- lesdits afficheurs (81-84) étant reliés via un BUS numérique à un convertisseur Ethernet (90) ;
- ledit convertisseur Ethernet (90) étant relié via un réseau LAN-Ethernet à un PC (91)
**caractérisé en ce que**
un afficheur (81) est relié à deux plateformes de pesage (101, 102).

2. Système de pesage pour une chapelle (1) d'une serre selon la revendication 1, dans lequel lesdits afficheurs (81-84) sont reliés avec une liaison prévue avec une protection IP adéquate pour les protéger de l'eau d'irrigation, lesdits afficheurs (81-84) étant de préférence agencés sur une perche dans le voisinage de chaque plateforme de pesage (101-108).

3. Système de pesage pour une chapelle (1) d'une serre comprenant une pluralité de plateformes de pesage (101-108) selon la revendication 1 ou 2, une pluralité d'afficheurs (81-84) et un PC (91), dans lequel
- toutes les liaisons montant vers ledit PC (91) sont des liaisons filaires.

4. Système de pesage pour une chapelle (1) d'une serre comprenant une pluralité de plateformes de pesage (101-108) selon la revendication 1 ou 2, une pluralité d'afficheurs (81-84) et un PC (91), dans lequel
- les liaisons entre les plateformes de pesage (101-108) et les afficheurs (81-84) montant vers un convertisseur de bus filaire en signal sans fil sont des liaisons filaires ; en descendant ledit convertisseur de bus filaire en signal sans fil, les données de pesage sont transmises sans fil.

5. Système de pesage pour une chapelle (1) d'une serre comprenant une pluralité de plateformes de pesage (101-108) selon la revendication 1 ou 2, une pluralité d'afficheurs (81-84) et un PC (91), dans lequel
- les liaisons entre les plateformes de pesage (101-108) et les afficheurs (81-84) sont des liaisons filaires, tandis que les afficheurs (81-84) comprennent un module sans fil interne permettant de transmettre les données de pesage directement au PC (91).

6. Système de pesage pour une chapelle (1) d'une serre comprenant une pluralité de plateformes de pesage (101-108) selon la revendication 1 ou 2, une pluralité d'afficheurs (81-84) et un PC (91), dans lequel
- toutes les liaisons sont sans fil, y compris les liaisons entre les plateformes de pesage (101, 102) et l'afficheur (81), dans les plateformes de pesage étant prévus une carte électronique ou quoi qu'il en soit certains composants à même de lire le poids et d'envoyer le signal sans fil optionnellement directement audit PC (91), tous les composants étant prévus avec une protection IP adéquate.

7. Système de pesage pour une chapelle (1) d'une serre comprenant une pluralité de plateformes de pesage (101-108) selon une ou plusieurs des revendications 4 à 6, une pluralité d'afficheurs (81-84) et un PC (91), dans lequel ledit PC (91) est relié à un serveur infonuagique.

8. Procédé de pesage de pots/plantes dans une serre utilisant un système de pesage selon une ou plusieurs des revendications 1 à 7, le procédé étant **caractérisé par** les étapes suivantes :
- agencement d'un nombre de plateformes de pesage (101-108) adéquat pour le type de plante sous culture par chapelle ;
- placement d'un nombre de pots/plantes adéquat pour les conditions de croissance spécifiques à une plante de chaque plateforme de pesage (101-108) ;
- réglage sur ledit PC (91) d'un intervalle de temps adéquat pour la plante cultivée entre deux enregistrements de pesage ;
- réalisation de l'enregistrement de pesage dans les temps préréglés.

9. Procédé de pesage de pots/plantes dans une serre selon la revendication 8, le procédé comprenant en outre l'étape de :
- envoi des données de pesage au PC (91).

10. Procédé de pesage de pots/plantes dans une serre selon la revendication 8 ou 9, le procédé comprenant en outre l'étape de :
- via le logiciel installé sur le PC (91), préparation d'un graphique des données de pesage enregistrées, de manière à vérifier l'adéquation de l'irrigation, optionnellement l'enregistrement des tendances de croissance des plantes dans la serre et optionnellement l'enregistrement de la fertilisation ou des traitements phytiatriques réalisés sur les plantes.

11. Procédé de pesage de pots/plantes dans une serre selon les revendications 8 à 10, le procédé comprenant en outre l'étape de :
- envoi des données de pesage enregistrées à un serveur infonuagique central.

12. Procédé de pesage de pots/plantes dans une serre selon la revendication 10, dans lequel les données de pesage sont utilisées pour ajuster automatiquement les paramètres d'irrigation d'un système d'irrigation automatique installé dans la serre dans laquelle le système de pesage selon les revendications 1 à 7 est prévu, dans lequel la quantité d'eau fournie par les bras d'irrigation, et/ou la vitesse de glissement desdits bras d'irrigation et/ou la fréquence d'opérations d'irrigation est/sont ajustée(s).
